# EUROPÄISCHE PATENTSCHRIFT

(11) **EP 0 966 337 B1**
(45) Veröffentlichungstag und Bekanntmachung des Hinweises auf die Patenterteilung: **20.06.2001**
(21) Anmeldenummer: 98913711.2
(22) Anmeldetag: 12.03.1998
(51) Int. Cl.: B23K 1/015

(54) **VERFAHREN UND VORRICHTUNG ZUR WÄRMEBEHANDLUNG VON WERKSTÜCKEN MIT HEISSEM DAMPF**
METHOD AND DEVICE FOR HEAT-TREATING WORKPIECES WITH HOT STEAM
PROCEDE ET DISPOSITIF POUR LE TRAITEMENT THERMIQUE DE PIECES PAR LA VAPEUR SURCHAUFFEE

(30) Priorität: 14.03.1997 DE 29704629 U
(43) Veröffentlichungstag der Anmeldung: 29.12.1999
(73) Patentinhaber: Asscon Systemtechnik Electronik GmbH, 86343 Königsbrunn (DE)
(72) Erfinder: ZABEL, Claus, D-86179 Augsburg (DE)
(74) Vertreter: Ernicke, Hans-Dieter, Dipl.-Ing.
(86) Internationale Anmeldenummer: EP9801437
(87) Internationale Veröffentlichungsnummer: WO9841352

(56) Entgegenhaltungen:
- EP-A- 0 239 380
- WO-A-89/04234
- DE-A- 3 811 031
- PATENT ABSTRACTS OF JAPAN vol. 015, no. 013 (M-1069), 11.Januar 1991 & JP 02 263567 A (SEIKO INSTR INC), 26.Oktober 1990,

## Beschreibung

Die Erfindung betrifft ein Verfahren und eine Vorrichtung zur Wärmebehandlung von Werkstücken mit heißem Dampf,- insbesondere zum Heißverbinden von elektronischen Bauteilen und/oder Platinen mit den Merkmalen im Oberbegriff der Verfahrens- und Vorrichtungshauptansprüche.

Beim Dampflöten von elektronischen Platinen wird die mit elektronischen Bauteilen bestückte und mit einer Lötpaste versehene Platine in einen Behandlungsraum mit einem ca. 200°C heißen Dampf gebracht. Der Dampf heizt die Platine auf, läßt die Lötpaste schmelzen und schafft die Lötverbindung zwischen Bauteilen und Platine. Beim Dampflöten besteht jedoch das Problem, daß die umgebungstemperierte Platine bei Eintritt in den Behandlungsraum durch den heißen Dampf und die schnelle Aufheizung einen Temperaturschock erfährt, der die Bauteile und die Platine beschädigen kann. Die Dampfmenge wird nämlich in der Behandlungskammer konstant gehalten und ist stets im Überschuß vorhanden, so daß mehr Dampf zur Verfügung steht als durch die Platinenerwärmung abkondensieren kann. Dadurch wird immer die physikalisch maximal mögliche Wärmemenge übertragen und die Platine mit maximaler Geschwindigkeit aufgeheizt.

Aus der JP-A-2263567 ist ein Verfahren und eine Vorrichtung zum Dampflöten von elektronischen Bauteilen oder Platinen bekannt, bei denen die auf die Bauteile einwirkende latente Wärmemenge zur Erzielung eines gewünschten Temperaturprofils der Bauteile gesteuert wird. Die Druckschrift zeigt eine sogenannte Zwei-Phasen-Lötanlage. Die Dampflötanlage arbeitet mit zwei Verdampfungsflüssigkeiten, die unterschiedliche Verdampfungstemperaturen haben und von einer Heizung beaufschlagt werden. Hierdurch werden zwei übereinander liegende Dampfbäder mit unterschiedlichen Temperaturen erzeugt, wobei die Dampftemperatur des oberen Bades unterhalb der Lotschmelztemperatur liegt. Das untere Dampfbad hat hingegen eine Temperatur, die höher als die Lotschmelztemperatur ist. Die einwirkende Wärmemenge wird über eine Hebevorrichtung in Verbindung mit einem Temperatursensor auf der Platine reguliert. In Abhängigkeit von der ermittelten Bauteiltemperatur wird über die Hebevorrichtung die Platine zwischen den unterschiedlich temperierten Dampfbädern hin- und herbewegt. Die Dampferzeugung ist bei dieser Dampflötanlage konstant.

Die EP-0 340 275 B1 und die parallele WO-A-89/04234 zeigen eine Dampflötanlage mit einer Behandlungskammer und einer vorgeschalteten Vorheizkammer. In der Vorheizkammer wird die aus Luft bestehende Atmosphäre mittels einer Wärmepumpenheizung auf eine gewünschte Temperatur erwärmt, mit der die Platinen vorbeheizt werden. In der anschließenden Behandlungskammer findet in der gewohnten Weise das Dampflöten mittels einem umgesättigten Behandlungsdampf statt. Hierbei kann in der Behandlungskammer ein inertes Gas zugeführt werden, das zusammen mit dem ungesättigten Dampf die Atmosphäre bildet. Dadurch kann die Konzentration des Dampfes innerhalb der Kammer gesteuert werden, um die Aufheizgeschwindigkeit der Platinen zu beeinflussen. Damit läßt sich eine langsamere Aufheizung der Platinen erreichen. Die Dampferzeugung innerhalb der Behandlungskammer bleibt konstant und wird nicht zum Zwecke einer Aufheizbeeinflussung der Platinen verändert. Am Boden der Behandlungskammer ist eine Heizplatte angeordnet, die von einer darunter liegenden Heizung erwärmt wird. In der Heizplatte sind Temperatursensoren angeordnet, mit denen die Erwärmung der auf die Dampfflüssigkeit einwirkenden Oberfläche der Heizplatte auf eine bestimmte festgelegte Temperatur gesteuert wird.

Ferner ist es aus der DE-A-39 15 040 bekannt, die Platine vor dem Eintritt in den Behandlungsraum durch Aufsprühen einer erwärmten Flüssigkeit vorzuwärmen. Hierbei kann es sich um die zur Verdampfung vorgesehene Flüssigkeit handeln. Diese Technik bringt jedoch einen erhöhten konstruktiven und prozeßtechnischen Aufwand mit sich. Es sind komplizierte Pumpensysteme, Düsensysteme und Filter in die Anlage einzubauen. Außerdem ist bei einem Besprühen nicht in vollem Umfang gewährleistet, daß alle Bereiche der Platine gleichmäßig beaufschlagt und erwärmt werden können. Problematisch können auch Sprührückstände sein.

Aus der DE-C 38 14 870 ist eine andere Dampflötanlage mit einer Vorheizung in Form einer Infrarotlichtschranke bekannt. Die Bestrahlung mit Infrarot hat den Nachteil, daß die Platine und die elektronischen Bauteile je nach ihrem Wärmeverhalten ungleichmäßig aufgeheizt werden. Hierbei kann es auch zu Verbrennungen und anderen Temperaturschäden kommen. Außerdem bedeutet die Bestrahlung einen zusätzlichen apparativen und prozeßtechnischen Aufwand.

Eine andere zwei-Phasen-Löteinrichtung ist beispielsweise aus der DE-A-38 11 031 bekannt. Sie besteht aus zwei unterschiedlichen Dampfmedien, die in Schichten übereinander liegen. Die obere zweite Dampfphase mit dem niedrigeren Siedepunkt kann zur Vorwärmung der Platinen dienen. Sie wird durch die darunterliegende Erstdampfphase, die einen höheren Siedepunkt besitzt, beheizt. Für die Beheizung der unteren Dampfphase ist eine regelbare Heizung vorgesehen. Außerdem sind Regeleinrichtungen zur Konstanthaltung der Badhöhen der beiden Dampfphasen vorhanden. Diese Heizungen und Regeleinrichtungen sind derart gesteuert, daß die Badhöhe der Dampfphasen konstant gehalten wird. Dadurch wird den Platinen auch in der Vorwärmzone stets ein Überschuß an Dampfmenge und die maximale Wärmemenge zugeführt, die unter den gegebenen physikalischen Bedingungen maximal aufgenommen werden kann. Auch hier erfolgt also eine Erwärmung der Platinen mit der maximalen Aufheizgeschwindigkeit ohne Rücksicht auf etwaige Temperaturprobleme der Platinen.

Entsprechende zwei-Phasen-Lötanlagen offenbaren auch die EP 0 205 309 A1, DE-P 0 138 707 A1 und die US 4,762,264. Auch hier sind die Steuerungen der Heizungen darauf ausgelegt, die in den jweiligen Behandlungsräumen befindliche Dampfmenge konstant zu halten und dazu mindestens soviel Heizenergie und Dampfmenge zuzuführen, wie maximal an den Platinen abkondensieren kann. Dies führt ebenfalls zu einer Aufheizung der Platinen in der Vorwärm - und Behandlungszone mit maximaler Geschwindigkeit.

Es ist daher Aufgabe der vorliegenden Erfindung, eine bessere Möglichkeit zur steuerbaren Aufheizung der Werkstücke aufzuzeigen.

Die Erfindung löst diese Aufgabe mit den Merkmalen im Verfahrens- und Vorrichtungshauptanspruch. Mit der erfindungsgemäßen Aufheizeinrichtung und dem Aufheizverfahren wird über eine gesteuerte Dampferzeugung das Werkstück mit der gewünschten Geschwindigkeit gezielt aufgeheizt. Die Aufheizung kann zur Schonung der Werkstücke insbesondere allmählich erfolgen. Sie kann auf unterschiedliche Weise gesteuert werden, z.B. über die Dampftemperatur, die erzeugte Dampfmenge oder eine Kombination dieser Parameter. Hierbei wird in allen Fällen nur soviel Wärmeenergie im Dampf erzeugt und dem Werkstück zugeführt, wie für dessen gewünschtes Aufheizverhalten benötigt wird. Wärmeüberschüsse können vermieden werden.

Der Dampf als Medium zum Aufheizen oder Vorwärmen hat den Vorteil, daß das Werkstück sehr gleichmäßig beaufschlagt und gleichmäßig erwärmt wird. Wärmespannungen lassen sich ausschließen. Außerdem kann der Dampf das Werkstück vollständig umhüllen und unter Sauerstoffabschluß bringen, wodurch Oxidationen und andere unerwünschte Nebenprozesse vermieden werden. Der Dampf gelangt auch an verborgene Stellen am Werkstück. Die Entstehung von Kältenester kann verhindert werden. Außerdem gibt es keine Verbrennungen oder sonstige Beschädigungen des Werkstückes.

Mittels der gesteuerten Dampferzeugung kann außerdem ein sehr genauer und feinfühlig einstellbarer sowie veränderlicher Aufheiz- oder Temperaturgradient im Werkstück gefahren werden, der eine möglichst schnelle und trotzdem möglichst schonende Aufheizung oder Vorwärmung des Werkstücks bietet. Dieser Gradient läßt sich beliebig gestalten und insbesondere an ein unterschiedliches Wärmeverhalten und an differierende Empfindlichkeiten der Werkstücke anpassen. Hierbei können beliebige Temperaturverläufe und -kurven gefahren werden, wobei sich z.B. Haltephasen und andere für den Erwärmungsprozeß vorteilhafte Prozeßabschnitte einbauen lassen.

Die erfindungsgemäße Technik hat den Vorteil, daß die Aufheizung oder Vorwärmung und die Dampfbehandlung in der gleichen Vorrichtung und unter Benutzung des gleichen Dampferzeugers erfolgen kann. Hierbei ist die Aufheizeinrichtung vorzugsweise in die Dampfbehandlungseinrichtung integriert. Der konstruktive und prozeßtechnische Aufwand ist dadurch sehr gering. Außerdem kann die Aufheizung sehr schnell geschehen und belastet den Prozeßtakt nicht.

Günstig ist ferner, daß keine zusätzlichen Heizeinrichtungen und Wärmeübertragungsmedien erforderlich sind. Das relativ teure Verdampfungsmedium kann zudem besonders gut ausgenutzt und wiedergewonnen werden. Die Dampfvorwärmung ist auch gegenüber anderen Techniken im wesentlichen frei von Verschleppungsverlusten.

Die erfindungsgemäße Technik ist von besonderem Vorteil für Dampflötanlagen. Sie läßt sich aber auch generell zur Wärmebehandlung von Bauteilen mit heißem Dampf einsetzen. Dies können z.B. Wärmebehandlungsverfahren zur Herstellung oder Behandlung von Verbindungen von Bauteilen, z.B. durch Kleben, sein. Solche Wärmebehandlungsverfahren können ferner zum Tempern oder Härten von Kunststoffen oder Metallen dienen. Die Werkstücke können von beliebiger Art sein.

Für die gesteuerte Dampferzeugung gibt es unterschiedliche Möglichkeiten, für die zwei vorteilhafte Ausführungsbeispiele angegeben sind. Hierbei kann gesättigter Dampf oder ungesättigter bzw. überhitzter Dampf erzeugt werden. Außerdem kann mit intermittierenden oder Durchlaufprozessen gearbeitet werden.

Die Erfindung ist in den Zeichnungen beispielsweise und schematisch dargestellt. Im einzelnen zeigen:
- Figur 1:: in einer schematischen Darstellung eine Behandlungsvorrichtung mit einer Aufheizeinrichtung in einer Dampfbehandlungseinrichtung zur Erzeugung von gesättigtem Dampf und
- Figur 2:: eine Alternative zu Figur 1 mit einem anderen Dampferzeuger zur Erzeugung von überhitztem Dampf.

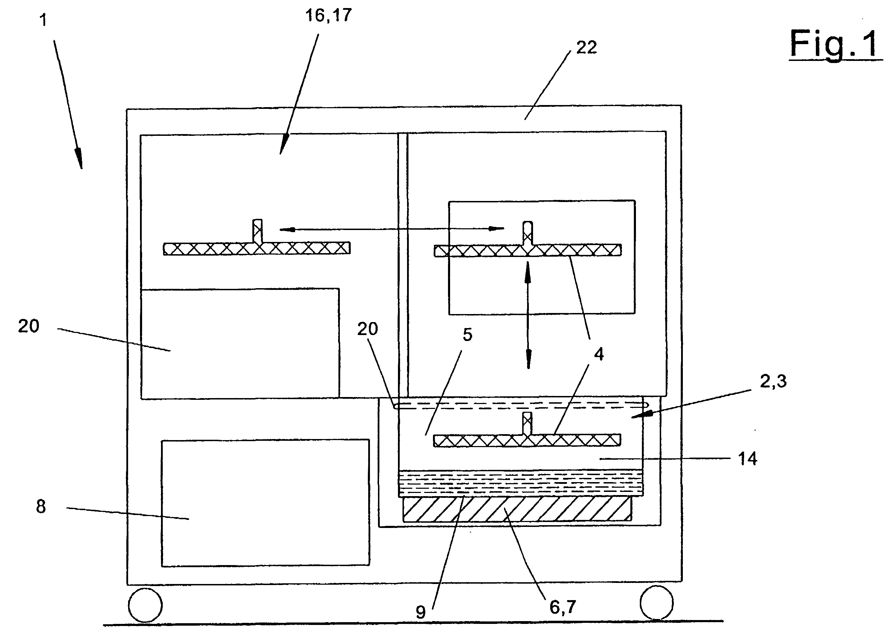

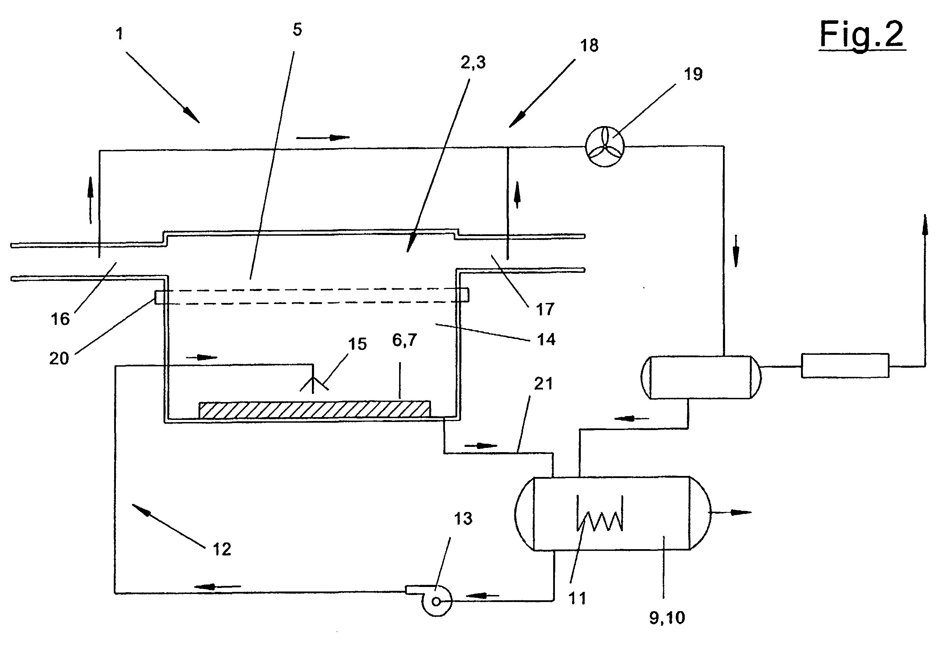

Figur 1 und 2 zeigen eine Behandlungsvorrichtung (1) zur Wärmebehandlung von Werkstücken (4) mit heißem Dampf (14). Bei den Werkstücken (4) handelt es sich vorzugsweise um Platinen mit aufgesetzten elektronischen Bauteilen, die durch ein Dampflötverfahren miteinander verbunden werden. Die Wärmebehandlung kann ansonsten auch von beliebiger anderer Art sein und beispielsweise aus einem Heißklebeprozeß, einem Tempern oder einem Härtevorgang bestehen. In der bevorzugten Ausführungsform ist die Behandlungsvorrichtung (1) als Dampflötanlage ausgebildet.

Die Behandlungsvorrichtung (1) besitzt eine Dampfbehandlungseinrichtung (2), in der der Hauptprozeß der Wärmebehandlung des Werkstücks (4) stattfindet. In den gezeigten Ausführungsbeispielen ist dies eine Dampflöteinrichtung. Die Behandlungsvorrichtung (1) hat ferner eine Aufheizeinrichtung (3), die in die Dampfbehandlungseinrichtung (2) vorzugsweise integriert ist. Die genannten Einrichtungen (2,3) sind zusammen mit weiteren Komponenten in einem Gehäuse oder Gestell (22) untergebracht.

Die Aufheizeinrichtung (3) erzeugt gesteuert einen heißen Dampf (14), der zur vorzugsweise allmählichen Erwärmung des Werkstücks (4) dient. In manchen Anwendungsfällen wird dies auch als eine Vorwärmung bezeichnet, insbesondere wenn die Aufheizung örtlich und zeitlich getrennt von der eigentlichen Dampflötung stattfindet.

Bei dieser Erwärmung mittels einer Dampfphase wird das physikalische Prinzip des Wärmeübergangs durch Kondensation des Dampfes auf einem kälteren Partner verwendet. Die Geschwindigkeit der Aufheizung bzw. der Erwärmungsgradient ist abhängig von der übertragenen Wärmemenge. Dies ermöglicht eine Steuerung der Erwärmung über die Dampferzeugung, insbesondere über die Menge des auf dem Werkstück (4) abkondensierten Dampfes und/oder über die Dampftemperatur und/oder die Einwirkzeit.

In der bevorzugten Ausführungsform wird die Erwärmung über die Menge des erzeugten Dampfes (14) und/oder über die Dampftemperatur gesteuert. Vorzugsweise geschieht dies über eine Leistungssteuerung der Heizung. In Verbindung mit geeigneten Meßeinrichtungen und einen Soll-/Istwert-Vergleich kann auch eine Regelung erfolgen.

Die Aufheizeinrichtung (3) und die Dampfbehandlungseinrichtung (2) nutzen vorzugsweise den gleichen Dampferzeuger (6). Der Dampferzeuger (6) hat eine Heizung (7) und ist durch eine geeignete Steuerung (8) in seiner Leistung steuerbar. Im Ausführungsbeispiel von Figur 1 produziert der Dampferzeuger (6) gesättigten Dampf und im Ausführungsbeispiel der Figur 2 ungesättigten oder überhitzten Dampf.

Im Ausführungsbeispiel von Figur 1 ist die Heizung (7) des Dampferzeugers (6) z.B. als elektrische Heizplatte mit einer Widerstandsheizung ausgebildet. Sie kann auch in beliebig anderer geeigneter Weise ausgebildet sein. Die Heizung (7) ist in oder an einem Bad mit einem geeigneten, vorzugsweise flüssigen Verdampfungsmedium (9) angeordnet. Hierbei handelt es sich z.B. um eine tetrafluoräthylenhaltige Flüssigkeit (9).

Die Heizung (7) befindet sich in einer dampfdicht abschließbaren Behandlungskammer (5), in der sowohl die Aufheizung oder Vorwärmung, wie auch die anschließende Dampfbehandlung, z.B. Lötbehandlung, des Werkstücks (4) erfolgt. In der Behandlungskammer (5) kann sich ferner eine Kühleinrichtung (20) befinden, die z.B. umlaufend in den seitlichen Kammerwänden angeordnet ist und die den Dampf (14) kondensiert. Durch diese ringförmige Kühleinrichtung (20) kann die Höhe des Dampfbades eingestellt werden.

Das Werkstück (4) wird über geeignete Fördermittel (nicht dargestellt) zunächst am Ein- und Auslaß (16,17) über eine andere Kühleinrichtung (20) geführt, die nach der Wärmebehandlung das Werkstück (4) auf eine handhabbare Temperatur herunterkühlt. In einer daran anschließenden Zwischenstation mit einem Sichtfenster kann das Werkstück (4) über der Behandlungskammer (5) in Position gebracht und gegebenenfalls noch einmal kontrolliert werden. Von hier kann es über die erwähnten Fördermittel in die Behandlungskammer (5) für den Vorwärme- und Behandlungsprozeß überführt und wieder zurückgebracht werden.

Bei der Aufheizung wird, wie eingangs erwähnt, die Menge des produzierten Dampfes (14) gesteuert. Somit ist es möglich, nur soviel Dampf zu erzeugen, wie für den gewünschten Temperaturgradienten und für die an das Werkstück (4) zu übertragende Wärmemenge benötigt wird. Man läßt dadurch nur eine begrenzte Menge Dampf (14) auf dem Werkstück (4) abkondensieren, obwohl theoretisch eine sehr viel größere Dampfmenge kondensieren könnte. Aufgrund der Wärmekapazität des zu erwärmenden Werkstücks (4) und des Energieinhaltes eines bestimmten Dampfvolumens läßt sich sehr genau der Grad der Aufheizung bestimmen. Je mehr Dampf produziert wird, um so mehr Dampf (14) kann auch auf der Oberfläche des Werkstücks (4) abkondensieren.

Die Produktion der Dampfmenge kann auf einfachste Weise sichergestellt werden. Um eine Dampfphase aus der Flüssigkeit (9) zu erzeugen, ist es notwendig, die verwendete Flüssigkeit (9) in einem ersten Schritt auf Siedetemperatur mittels der steuerbaren Heizung (7) aufzuwärmen. Um diese Flüssigkeit (9) nach Erreichen der Siedetemperatur zu verdampfen, muß weiterhin ein Energiebetrag der Flüssigkeit (9) zugeführt werden, um diese Zustandsänderung vom flüssigen in den dampfförmigen Zustand zu erreichen (die sogenannte Verdampfungsenthalpie). Diese Menge an Energie, die der Flüssigkeit (9) zur Verdampfung zugeführt werden muß, ist eine Materialkonstante dieser Flüssigkeit (9). Mit Kenntnis dieser z.B. in Watt pro Volumeneinheit definierten Materialkonstante ist es möglich, durch eine Steuerung oder Regelung der zugeführten Energiemenge in die Flüssigkeit (9) ein exakt definiertes Maß an Dampf (14) zu produzieren. Die so produzierte Dampfmenge kann an das zu erwärmende Werkstück (4) angepaßt werden. Dies geschieht über die Steuerung oder Regelung der Heizleistung, was stufenlos oder in festgelegten Schritten erfolgen kann.

Durch eine Änderung der Leistungsabgabe ist es möglich, Temperaturprofile oder Aufheizgradienten nach einer vorher festgelegten Form zu erreichen. Es ist z.B. möglich, ab Raumtemperatur nur sehr wenig Dampf (14) zu produzieren und somit eine sehr geringe Aufwärmung des Werkstücks (4) zu erreichen. Wenn in einem gewissen Bereich der Aufheizung eine schnellere Erwärmung gewünscht wird, wird in diesem Bereich mehr Leistung in die Flüssigkeit (9) zugeführt und somit mehr Dampf produziert. Dies ergibt auch eine schnellere Aufheizung des Werkstücks (4). Wenn kurz vor Erreichen der Endtemperatur des Werkstücks (4) noch eine sehr geringe Aufwärmung erwünscht ist, wird die Menge des produzierten Dampfes reduziert, indem die Leistung der Heizung (7) zurückgenommen wird.

Bei Aufheizung wird durch eine gesteuerte Dampfmengenerzeugung das Werkstück (4) auf die Prozeß- oder Behandlungstemperatur von z.B. 200°C beim Dampflöten aufgeheizt. Anschließend kann die Hauptwärmebehandlung stattfinden. Nach Abschluß der Wärmebehandlung wird das Werkstück (4) zurückbefördert und über den Ein- und Auslaß (16,17) gegen ein neues Werkstück (4) getauscht.

In Figur 1 findet ein intermittierender Einzel-Behandlungsprozeß mit einer festgelegten Taktzeit statt. Alternativ kann auch ein kontinuierliches Behandlungsverfahren mit einem Durchlauf der Werkstücke (4) stattfinden, wobei Dampfverschleppungen durch geeignete Schleusen und andere Sicherungsmaßnahmen vermieden werden. Ein kontinuierliches Verfahren kann z.B. unter Einbeziehung der erfindungsgemäßen Aufheizung entsprechend der DE-A 38 14 870 stattfinden.

Figur 2 zeigt eine Variante der Behandlungsvorrichtung (1) in der ungesättigter oder überhitzter Dampf (14) produziert wird. Auch hier kann eine Steuerung der Dampferzeugung über die Heizleistung erfolgen.

Das Verdampfungsmedium bzw. die Flüssigkeit (9) befindet sich in einem tankartigen Reservoir (10) und wird hier oder an einer separaten Stelle mit einer Fluidheizung (11) auf eine Temperatur knapp unterhalb der Verdampfungstemperatur erwärmt. Die Erwärmung kann z.B. auf 5°C unterhalb der Verdampfungstemperatur gesteuert werden. Die erwärmte Flüssigkeit (9) wird dann über eine geeignete Zuführeinrichtung (12) einer Heizung (7) zugeführt und dort verdampft, wobei ungesättigter oder überhitzter Dampf (14) entsteht. Die Heizung (7) ist örtlich getrennt vom Reservoir (10) und der Fluidheizung (11).

Die Zuführeinrichtung (12) besteht z.B. aus einer Zuführleitung mit einer steuerbaren Pumpe (13). Die Flüssigkeit (9) wird auf die Oberfläche der vorzugsweise plattenförmigen Heizung (7) durch ein oder mehrere Düsen (15) aufgesprüht und dabei verdampft. Die Heizung (7) und die Düsen (15) befinden sich in der Behandlungskammer (5), in der wiederum sowohl die Aufheizung als auch die Hauptwärmebehandlung der Werkstücke (hier nicht dargestellt) stattfindet.

Die Temperatur der Heizplatte (7) liegt über dem Siedepunkt der Flüssigkeit (9) bzw. der Verdampfungstemperatur. Die Wärmekapazität der Heizplatte (7) ist so bemessen, daß die Energie genügt, die aufgesprühte und vorgeheizte Flüssigkeit (9) schlagartig zu verdampfen. Die Temperatur des überhitzten Dampfes (14) liegt dabei über der Siedetemperatur der Flüssigkeit (9).

Die Steuerung dieses Dampferzeugers (6) erfolgt durch eine Anpassung des Volumenstroms der vorgeheizten Flüssigkeit (9), z.B. mittels der steuerbaren Pumpe (13). Durch die Volumensteuerung kann festgelegt werden, wieviel Dampf (14) pro Zeiteinheit erzeugt wird. Somit ist auch eine an die gewünschte Aufheizkurve angepaßte Dampfproduktion möglich.

Eine andere Möglichkeit der gesteuerten Aufheizung liegt darin, die Temperatur der Heizplatte (7) zu verändern und insbesondere langsam zu erhöhen. Die Folge ist auch, daß sich die Temperatur des überhitzten Dampfes (14) erhöht. Folglich muß sich auch das Werkstück (4), das sich in dieser ungesättigten Dampfdecke befindet, an die Erhöhung der Dampftemperatur anpassen.

Möglich sind auch Abwandlungen und Kombinationen der verschiedenen Techniken. So kann z.B. die produzierte Dampfmenge zu einer gewissen wählbaren und einstellbaren Endtemperatur des Werkstücks (4) über eine Mengensteuerung oder -regelung beeinflußt werden. Ab diesem Zeitpunkt wird dann bei einer konstant produzierten Dampfmenge die Temperatur des Dampfes durch Temperaturerhöhung der Heizplatte (7) bis zum gewünschten Endtemperaturwert des Werkstücks (4) gesteigert. Die Grundtechnik zur Erzeugung eines überhitzten Dampfes kann z.B. entsprechende der EP-A-0 340 275 ausgelegt sein.

In einer besonders einfachen Ausführungsform wird die Dampferzeugung zwar an den gewünschten Temperaturgradienten der Werkstücke (4) angepaßt, wobei sie während des Prozesses aber nicht verändert wird. Dies ist z.B. möglich, indem die Heizleistung des Dampferzeugers (6) auf einen geeigneten Wert begrenzt und dort konstant gehalten wird. Dies hat zur Folge, daß entsprechend der begrenzten Dampfmenge die Aufwärmung der Werkstücke (4) in der gewünschten Weise langsam und allmählich erfolgt. Während des eigentlichen Lötvorganges bleibt die Heizleistung ebenfalls auf dem eingestellten Wert unterhalb der maximalen Heizleistung bestehen. Der Lötvorgang kann dann unter Umständen etwas länger dauern. Bei dieser Ausführungsform wird die Heizleistung über einen entsprechenden Wählschalter auf den gewünschten Wert eingestellt. Die Einstellung kann stufenlos oder in vorgebenen Schritten erfolgen. Je nach Art der Werkstücke (4) und des gewünschten Aufheizverhaltens werden niedrigere oder höhere Heizleistungen eingestellt. In diesem Fall kann eine aufwendige Steuerung, die die Heizleistung während des Prozesses verändert, entfallen. In Abwandlung zu der vorerwähnten Ausführungsform kann die Heizleistung konstant bleiben und die Zuführmenge Verdampfungsmediums (9) wird entsprechend des gewünschten Aufheizverhaltens auf bestimmte Werte begrenzt und fest eingestellt. Hierbei wird wie in Figur 2 z.B. überhitzter und ungesättigter Dampf erzeugt. Bei der erstgenannten Variante, die der Ausführungsform von Figur 1 entspricht, wird gesättigter Dampf (14) produziert. Hierbei kann z.B. das Lötgut (4) in das Dampfbad (14) gebracht werden. Durch die Abkondensation sinkt das Dampfbad ab. Durch die bewußte Leistungsbeschränkung wird jedoch nur soviel Wärmeenergie zugeführt, wie tatsächlich auf dem Werkstück (4) abkondensieren soll. Bei diesen beiden alternativen Varianten ist für empfindliche Werkstücke (4) die Dampferzeugung kleiner als maximal möglich.

Im Ausführungsbeispiel von Figur 2 kann in der Behandlungskammer (5) ebenfalls eine Kühleinrichtung (20) angeordnet sein, die den Dampf (14) kondensiert und die Höhe des Dampfbades um und über dem Werkstück (4) bestimmt. Mit dieser Kühleinrichtung (20) kann nach Beendigung der Aufheizung und Hauptwärmebehandlung der Dampf (14) in der Behandlungskammer (5) auch wieder auf einen Anfangswert abkondensiert werden. Durch einen Rücklauf (21) am Boden der Behandlungskammer (5) kann die abkondensierte Flüssigkeit (9) wieder in das Reservoir (10) zurückgeführt werden.

Die Behandlungskammer (5) besitzt wie im ersten Ausführungsbeispiel einen Einlaß (16) und einen Auslaß (17) für das Werkstück (4), welche hier allerdings einander gegenüberliegen und eine Durchlaufproduktion gestatten. In diesem Bereich besitzt die Behandlungsvorrichtung (1) auch eine Dampfentsorgung (18), die mit Schleusen und ähnlichen Mitteln ein Entweichen des Dampfes (14) aus der Behandlungskammer (5) vermeidet und gegebenenfalls auch im Bereich vom Einlaß (16) und Auslaß (17) Dampfreste über eine Absaugung (19) abzieht und nach entsprechender Kondensation in einem Sammeltank wieder in das Reservoir (10) zurückgibt. Im Sammeltank kann auch eine Abscheideeinrichtung angeordnet sein, die die Luft über geeignete Filter abzieht und gereinigt an die Außenatmosphäre abgibt.

Abwandlungen der gezeigten Ausführungsformen sind in beliebig geeigneter Weise möglich. Ferner ist es möglich, die Aufheizung und Hauptwärmebehandlung an unterschiedlichen Stellen vorzunehmen und dabei mit getrennten Dampferzeugern zu arbeiten. Dies ist vor allem für eine Durchlaufbehandlungsanlage machbar. Die Behandlungsvorrichtung (1) kann ferner stationär oder beweglich angeordnet sein.

### BEZUGSZEICHENLISTE

- 1: Behandlungsvorrichtung, Dampflötanlage
- 2: Dampfbehandlungseinrichtung, Dampflöteinrichtung
- 3: Aufheizeinrichtung
- 4: Werkstück, Platine
- 5: Behandlungskammer
- 6: Dampferzeuger
- 7: Heizung, Heizplatte
- 8: Steuerung
- 9: Verdampfungsmedium, Flüssigkeit
- 10: Reservoir
- 11: Fluidheizung
- 12: Zuführeinrichtung
- 13: Pumpe
- 14: Dampf
- 15: Düse
- 16: Einlaß
- 17: Auslaß
- 18: Dampfentsorgung
- 19: Absaugung
- 20: Kühleinrichtung
- 21: Rücklauf
- 22: Gestell

## Patentansprüche

1. Verfahren zur Wärmehandlung von Werkstücken (4), insbesondere zum Heißverbinden von elektronischen Bauteilen oder Platinen, mit heißem Dampf (14) in einer Behandlungsvorrichtung (1) mit mindestens einem Dampferzeuger (6), wobei die Werkstücke (4) mit Dampf (14) aufgeheizt werden und die einwirkende Wärmemenge zur Erzeugung eines gewünschten Temperaturgradienten der Werkstücke (4) gesteuert wird, dadurch **gekennzeichnet**, daß die Dampferzeugung für die benötigte Wärmemenge zur Erzeugung des gewünschten Temperaturgradienten der Werkstücke (4) gesteuert wird.

2. Verfahren nach Anspruch 1, dadurch
**gekennzeichnet**, daß die erzeugte Dampfmenge oder die Dampftemperatur gesteuert wird.

3. Verfahren nach Anspruch 1 oder 2, dadurch
**gekennzeichnet**, daß Dampfmenge über die Heizleistung des Dampferzeugers (6) gesteuert wird.

4. Verfahren nach Anspruch 1, 2 oder 3, dadurch
**gekennzeichnet**, daß Dampfmenge über das zugeführte Volumen des Verdampfungsmediums (9) gesteuert wird.

5. Vorrichtung zur Wärmehandlung von Werkstücken (4), insbesondere zum Heißverbinden von elektronischen Bauteilen oder Platinen, mit heißem Dampf (14), wobei die Behandlungsvorrichtung (1) eine Dampfbehandlungseinrichtung (2) mit einem Dampferzeuger (6) und eine Einrichtung zum gesteuerten Aufheizen der Werkstücke aufweist, dadurch **gekennzeichnet**, daß die Aufheizeinrichtung (3) einen steuerbaren (8) Dampferzeuger (6) aufweist, der in Abhängigkeit von der benötigten Wärmemenge zur Erzeugung eines gewünschten Temperaturgradienten der Werkstücke (4) gesteuert ist.

6. Behandlungsvorrichtung nach Anspruch 5, dadurch
**gekennzeichnet**, daß die Aufheizung-über die erzeugte Dampfmenge, die Dampftemperatur oder die Einwirkzeit steuerbar ist.

7. Behandlungsvorrichtung nach Anspruch 5 oder 6, dadurch **gekennzeichnet**, daß die Aufheizeinrichtung (3) in die Dampfbehandlungseinrichtung (2) integriert ist.

8. Behandlungsvorrichtung nach Anspruch 5, 6 oder 7, dadurch **gekennzeichnet**, daß die Dampfbehandlungseinrichtung (2) und die Aufheizeinrichtung (3) einen gemeinsamen Dampferzeuger (6) aufweisen.

9. Behandlungsvorrichtung nach einem der Ansprüche 5 bis 8, dadurch **gekennzeichnet**, daß der steuerbare Dampferzeuger (6) eine in der Leistung steuerbare Heizung (7) aufweist.

10. Behandlungsvorrichtung nach einem der Ansprüche 5 bis 9, dadurch **gekennzeichnet**, daß der steuerbare Dampferzeuger (6) eine Einrichtung (12) zur Volumensteuerung des Verdampfungsmediums (9) aufweist.

11. Behandlungsvorrichtung nach Anspruch 9 oder 10, dadurch **gekennzeichnet**, daß die Heizung (7) mit einem Verdampfungsmedium (9) zur Erzeugung von gesättigtem Dampf (14) in Verbindung steht.

12. Behandlungsvorrichtung nach einem der Ansprüche 5 bis 11, dadurch **gekennzeichnet**, daß der steuerbare Dampferzeuger (6) ein Reservoir (10) und eine Fluidheizung (11) zur Vorwärmung des Verdampfungsmediums (9) sowie eine Zuführeinrichtung (12) und eine Heizung (7) zum Erzeugen eines überhitzten Dampfs (14) der vorgewärmten Flüssigkeit (9) aufweist.

13. Behandlungsvorrichtung nach einem der Ansprüche 1 bis 12, dadurch **gekennzeichnet**, daß eine Dampfentsorgung (17) vorgesehen ist.

## Claims

1. Method for the heat treatment of workpieces (4), in particular for the hot joining of electronic components or printed circuit boards, with hot vapour (14) in a treatment apparatus (1) having at least one vapour generator (6), the workpieces (4) being heated with vapour (14) and the acting heat quantity being controlled for producing a desired temperature gradient of the workpieces (4), characterized in that the vapour generation is controlled for the requisite heat quantity for producing the desired temperature gradient of the workpieces (4).

2. Method according to Claim 1, characterized in that the generated vapour quantity or the vapour temperature is controlled.

3. Method according to Claim 1 or 2, characterized in that the vapour quantity is controlled via the heating output of the vapour generator (6).

4. Method according to Claim 1, 2 or 3, characterized in that the vapour quantity is controlled via the fed volume of vaporization medium (9).

5. Apparatus for the heat treatment of workpieces (4), in particular for the hot joining of electronic components or printed circuit boards, with hot vapour (14), the treatment apparatus (1) having a vapour-treatment device (2) with a vapour generator (6) and a device for the controlled heating of the workpieces, characterized in that the heating device (3) has a controllable (8) vapour generator (6) which is controlled as a function of the requisite heat quantity for producing a desired temperature gradient of the workpieces (4).

6. Treatment apparatus according to Claim 5, characterized in that the heating can be controlled via the generated vapour quantity, the vapour temperature or the reaction time.

7. Treatment apparatus according to Claim 5 or 6, characterized in that the heating device (3) is integrated in the vapour-treatment device (2).

8. Treatment apparatus according to Claim 5, 6 or 7, characterized in that the vapour-treatment device (2) and the heating device (3) have a common vapour generator (6).

9. Treatment apparatus according to one of Claims 5 to 8, characterized in that the controllable vapour generator (6) has a heater (7) controllable as regards output.

10. Treatment apparatus according to one of Claims 5 to 9, characterized in that the controllable vapour generator (6) has a device (12) for the volume control of the vaporization medium (9).

11. Treatment apparatus according to Claim 9 or 10, characterized in that the heater (7) is connected to a vaporization medium (9) for generating saturated vapour (14).

12. Treatment apparatus according to one of Claims 5 to 11, characterized in that the controllable vapour generator (6) has a reservoir (10) and a fluid heater (11) for preheating the vaporization medium (9) and a feed device (12) and a heater (7) for generating a superheated vapour (14) of the preheated liquid (9).

13. Treatment apparatus according to one of Claims 1 to 12, characterized in that a vapour disposal means (17) is provided.

## Revendications

1. Procédé de traitement thermique de pièces (4), notamment de fixations à chaud de composants électroniques ou de plaquettes, par de la vapeur (14) chaude dans un dispositif (1) de traitement ayant au moins un générateur (6) de vapeur, les pièces (4) étant chauffées par de la vapeur (14) et la quantité de chaleur agissante étant commandée pour produire un gradient de température souhaité des pièces (4), caractérisé en ce que la production de vapeur pour la quantité de chaleur nécessaire est commandée pour la production du gradient de température souhaitée des pièces 4.

2. Procédé suivant la revendication 1, caractérisé en ce qu'il consiste à commander la quantité de vapeur produite ou la température de la vapeur.

3. Procédé suivant la revendication 1 ou 2, caractérisé en ce qu'il consiste à commander la quantité de vapeur par la puissance calorifique du générateur (6) de vapeur.

4. Procédé suivant la revendication 1, 2 ou 3, caractérisé en ce qu'il consiste à commander la quantité de vapeur par le volume du fluide (9) d'évaporation qui est apporté.

5. Dispositif de traitement thermique de pièces (4), notamment de fixations à chaud de composants électroniques ou de plaquettes par de la vapeur (14) chaude, le dispositif (1) de traitement comportant un dispositif (2) de traitement à la vapeur ayant un générateur (6) de vapeur et un dispositif de chauffage commandé des pièces, caractérisé en ce que le dispositif (3) de chauffage comporte un générateur (6) de vapeur qui peut être commandé (8) et qui est commandé en fonction de la quantité de chaleur nécessaire pour produire un gradient de température souhaité des pièces (4).

6. Dispositif de traitement suivant la revendication 5, caractérisé en ce que le chauffage peut être commandé par la quantité de vapeur produite par la température de la vapeur ou par la durée d'action.

7. Dispositif de traitement suivant la revendication 5 ou 6, caractérisé en ce que le dispositif (3) de chauffage est intégré au dispositif (2) de traitement à la vapeur.

8. Dispositif de traitement suivant la revendication 5, 6 ou 7, caractérisé en ce que le dispositif (2) de traitement à la vapeur et le dispositif (5) de chauffage comportent un générateur (6) de vapeur qui leur est commun.

9. Dispositif de traitement suivant l'une des revendications 5 à 8, caractérisé en ce que le générateur (6) de vapeur qui peut être commandé comporte un chauffage (7) dont la puissance peut être commandée.

10. Dispositif suivant l'une des revendications 5 à 9, caractérisé en ce que le générateur (6) de vapeur qui peut être commandé comporte un dispositif (12) de commande en volume du fluide (9) d'évaporation.

11. Dispositif suivant la revendication 9 ou 10, caractérisé en ce que le chauffage (7) communique avec un fluide (9) d'évaporation pour produire de la vapeur (14) saturée.

12. Dispositif suivant l'une des revendications 5 à 11, caractérisé en ce que le générateur (6) de vapeur qui peut être commandé comporte un réservoir (10) et un chauffage (11) à fluide pour préchauffer le fluide (9) d'évaporation, ainsi qu'un dispositif (12) d'amenée et un chauffage (7) pour produire une vapeur (14) surchauffée du liquide (9) préchauffé.

13. Dispositif suivant l'une des revendications 1 à 12, caractérisé en ce qu'il est prévu une évacuation (17) de vapeur.
